# EUROPÄISCHE PATENTANMELDUNG

(11) **EP 0 567 759 A2**
(43) Veröffentlichungstag der Anmeldung: **03.11.1993**
(21) Anmeldenummer: 93104441.6
(22) Anmeldetag: 18.03.1993
(51) Int. Cl.: B02C 4/12

(54) **Vorrichtung zum Pulverisieren von Gummibrocken**

(30) Priorität: 25.04.1992 DE 4213607
(71) Anmelder: PAUL TROESTER MASCHINENFABRIK, D-30519 Hannover (DE)
(72) Erfinder: Gohlisch, Hans-Joachim, Dipl.-Ing., W-3000 Hannover 81 (DE)
(74) Vertreter: Junius, Walther, Dr.

(57) **Zusammenfassung**

Die Erfindung betrifft eine Vorrichtung zum Pulverisieren von Gummibrocken. Es ist die Aufgabe der Erfindung, mit einfachen Mitteln unter verringertem Energieaufwand Gummibrocken zu einem mehlartigen Pulver zu zerreiben. Die Erfindung besteht darin, daß in einer feststehenden Schale mit einer Ausnehmung (4) von der Form eines Hohlzylindersegmentes eine in diese Ausnehmung eintauchende rotierende Walze (2) derart angeordnet ist, daß zwischen der Schale (4) und der Walze (2) ein Spalt gebildet ist, und daß die Ausnehmung (4) an der Seite, an der die Walzenoberfläche bei der Walzenrotation in die Ausnehmung eintritt, trichterförmig erweitert ist, oder daß über der Stelle, an der die Walzenoberfläche bei der Walzenrotation in die Ausnehmung (4) eintritt, ein Trichter (8) angeordnet ist.

## Beschreibung

Die Erfindung betrifft eine Vorrichtung zum Pulverisieren von Gummibrocken.

Die Entsorgung von Gummireifen ist ein schwer lösbares Problem. Zum einen bereitet es erhebliche Schwierigkeiten, die im Gummi des Reifens eingelagerten Metallteile vom Gummi zu trennen, bevor dieses durch Zerkleinerungsmaschinen läuft, zum anderen bestehen Möglichkeiten der Wiederverwendung von Gummi nur dann, wenn das Gummi in sehr fein verteilter Form praktisch pulverförmig vorliegt, weil nur in dieser Form Altgummi als Zuschlagstoff von der Gummiindustrie für die Produktion neuer Gummiwaren wiederverwertet werden kann.

Um die Gummireifen zu zerkleinern, setzt man schneidende und spanende Werkzeuge ein. Gemäß der DE 29 ll 25l C2 wird der Reifen in einer Einspannvorrichtung mit drei nach außen verschiebbaren Zapfen aufgenommen, sodann wird mit rotierenden Scheibenmessern ein tangentialer Schnitt vorgenommen und die Lauffläche mit den Seitenstreifen von den die metallischen Einlagen vorzugsweise enthaltenden, an den Feigen anliegenden Wülsten abgeschnitten und nachfolgend durch weitere kreisscheibenförmige Messer in Streifen zerschnitten und dann einer Querschneidevorrichtung zugeführt. Die hierbei erhaltenen Gummibrocken bedürfen weiterer Zerkleinerung.

Andere, den Gummireifen abbauende Maschinen sind die Shredder, welche mit rotierenden Messerwalzen am Umfang des Laufstreifens angreifen und den Laufstreifen sowie die Seitenstreifen zu Chips zerkleinern (US 36 93 894 A1). In ähnlicher Weise arbeitet eine Maschine nach der SU l3 88 294 A1, wobei hier der Reifen durch beidseitig an den Seitenstreifen angreifende Schalen eingespannt und gepreßt wird, wodurch der Laufstreifen gebogen und verformt wird und in diesem schmaleren Zustand den Messern einer Shredderwalze zugeführt wird. Ähnlich erfolgt die Zerkleinerung in der Zerkleinerungsmaschine nach der DE 37 04 725 A1, in welcher die auf rotierenden Zerkleinerungswalzen angeordneten Zerkleinerungswerkzeuge Hartmetallplättchen sind und die Zerkleinerungswerkzeuge selbst in besonderer Form angeordnet sind.

Die bei allen diesen Zerkleinerungsverfahren erhaltenen Gummistücke sind technisch noch nicht in der Gummiindustrie als Zuschlagstoffe wiederverwertbar. Denn die erhaltenen Gummibrocken sind so grob, von derart ungleichmäßiger Gestalt und inhomogen, daß ihre weitere Verarbeitung und Zerkleinerung große Schwierigkeiten bereitet.

Aber auch bei der Produktion fällt Gummischrott an, z.B. wenn durch irgendwelche Produktionsfehler oder Mischungsfehler oder durch die Verwendung ungeeigneter Mischungen Ausschußware erzeugt wird.

Aus der DD 265 855 A1 ist eine Vorrichtung zum Zermahlen von Gummi bekannt geworden, mit der derartige Brocken weiterverarbeitet werden können. Bei dieser bekannten Vorrichtung schließt sich an einen mit mehreren Arbeitsbereichen versehenen Extruder über ein radiales Ausgangsrohr eine Mühle mit zwei, einen kegelförmigen Mahlspalt einschließenden Mahlscheiben an. Unterschiedliche Bearbeitungszonen sind im Extruder durch verschiedene Gestaltungen von verschiedenen Schneckenabschnitten erreicht worden. Das an die Extrusion folgende Einbringen der gepreßten Gummibrocken in den Mahlspalt ist schwierig, das Zermahlen des Gummis ist problematisch.

Denn Gummi ist ein äußerst schwer zu zerkleinerndes Material, das in vielerlei Hinsicht inhomogen ist: Durch unterschiedliche Sonnenbestrahlung und unterschiedliche Belastungen während der Laufdauer eines Automobilreifens sowie durch unterschiedliche Lebensalter ist der zu bearbeitende Gummischrott unterschiedlich gealtert. Die Brocken des Gummischrotts weisen stark gealterte Anteile auf, welche relativ leicht fein zu zerkleinern sind. Andere, weniger gealterte Teile hingegen weisen noch hohe Elastizitätseigenschaften auf und sind daher durch Zerreiben nicht oder nur äußerst schwierig zu zerkleinern. In den meisten Fällen hängen stark gealterte Bestandteile mit wenig gealterten Bestandteilen einstückig zusammen. Daher ergeben sich besondere Schwierigkeiten bei der Zerkleinerung. Diese Schwierigkeiten werden noch dadurch erhöht, daß sich Fremdstoffe in Form von Metallteilen im Gummischrott befinden, die sich vor dem Mahlvorgang nicht herauslösen lassen, weil sie teils von Gummi umgeben sind, teils das Gummi an ihnen anvulkanisiert ist. Diese Metallteile wirken zerstörend auf die Mahlscheiben ein.

Die vorliegende Erfindung vermeidet die Nachteile des Standes der Technik. Es ist die Aufgabe der Erfindung, mit einfachen Mitteln unter verringertem Energieaufwand Gummibrocken zu einem mehlartigen Pulver zu zerrei-ben.

Die Erfindung besteht darin, daß in einer feststehenden Schale mit einer Ausnehmung von der Form eines Hohlzylindersegmentes eine in diese Ausnehmung eintauchende rotierende Walze derart angeordnet ist, daß zwischen der Schale und der Walze ein Spalt gebildet ist, und daß die Ausnehmung an der Seite, an der die Walzenoberfläche bei der Walzenrotation in die Ausnehmung eintritt, trichterförmig erweitert ist, oder daß über der Stelle, an der die Walzenoberfläche bei der Walzenrotation in die Ausnehmung eintritt, ein Trichter angeordnet ist. Diese Vorrichtung ist äußerst einfach aufgebaut und gibt die Möglichkeit, Gummibrocken zwischen der Oberfläche der feststehenden Schale und der Oberfläche der in diese Schale eintauchenden rotierenden Walze zu zerreiben. In dem Gummi enthaltene Metallteile nehmen an diesem Prozeß des Zerreibens teil und fördern das Zerreiben des Gummis. Die Oberflächen der Schale und der Walze werden durch Metallteile nur geringfügig aufgerauht, solche Aufrauhungen fördern den Zerreibungsprozeß des Gummis. Zweckmäßig ist es, wenn zumindest die Oberflächen der Schale und der Walze gehärtet sind.

Der Wirkungsgrad dieser Vorrichtung wird dann besonders hoch, wenn die Walze mit einer Preßkraft beaufschlagt ist, die die Walze in die Ausnehmung hineinpreßt, und wenn vorzugsweise verstellbare Anschläge vorgesehen sind, die eine bestimmte, vorzugsweise einstellbare, Spaltweite sichern.

Baulich wird diese Vorrichtung sehr einfach, wenn die Schale durch eine halbzylindrische Ausnehmung in einem quaderförmigen Block gebildet ist.

Für einen einfachen Aufbau dieser Vorrichtung ist es auch zweckmäßig, wenn der quaderförmige Block auf einer Seite der halbzylindrischen Ausnehmung einen nach oben gerichteten Vorsprung aufweist, der eine feststehende Wand des Trichters bildet, dessen gegenüberliegende Wand durch einen Teil der nicht in die Ausnehmung eintauchenden Walzenoberfläche gebildet ist.

Konstruktiv läßt sich diese Vorrichtung sehr leicht aufbauen, wenn die Ausnehmung durch seitlich am quaderförmigen Block angeordnete Platten verschlossen ist.

Grobe Gummibrocken mit noch erheblichen elastischen Anteilen müssen, um zu einem sehr feinen Pulver verarbeitet zu werden, diese Vorrichtung zwei- oder mehrmals passieren, wobei es zweckmäßig ist, wenn mit jedem Durchgang der Spalt zwischen der Walze und der Schalenoberfläche kleiner wird. In diesen Fällen ist es zweckmäßig, wenn mehrere Schalen versetzt übereinander angeordnet sind.

Weiter ist es bei dieser Anordnung von mehreren Schalen übereinander vorteilhaft, wenn zwischen je zwei Walzen-Schalen-Aggregaten eine Sieb-, Sortier- und/oder Sichtvorrichtung und/oder eine Metallsuch- und Aussortiervorrichtung angeordnet ist. Auf diese Weise wird jeweils das bereits genügend fein pulverisierte Material aussortiert, ebenso werden die Metallteile aus dem Strom der zerriebenen Gummibrocken entfernt, so daß in den nachfolgenden Walzen-Schalen-Aggregaten die Spaltweite immer enger eingestellt werden kann und somit bei nur geringfügiger Abnutzung der Pulverisiervorrichtung das erhaltene Pulver immer feinkörniger wird.

Für den Aufbau einer solchen aus mehreren Walzen-Schalen-Aggregaten bestehenden Vorrichtung ist es zweckmäßig, wenn die Trichter wechselnd einmal auf der einen, das andere Mal auf der anderen Seite vorzugsweise derart angeordnet sind, daß sich jeder Trichter unter dem Spaltausgang des darüber angeordneten Walzen-Schalen-Aggregates befindet, so daß jeweils ein Trichter unter dem Ausgang der darüber angeordneten Walzen-Schalen-Anordnung befindlich ist, so daß das aus dem Ausgang der Vorrichtung kommende Material direkt in den Trichter der nächsten Vorrichtung fällt.

Hierbei ist es baulich vorteilhaft, wenn die Blöcke der Walzen-Schalen-Aggregate auf einem gemeinsamen Gestell angeordnet sind, wenn die Walzen in einem weiteren Gestell gemeinsam angeordnet sind, und wenn die beiden Gestelle relativ zueinander verschiebbar sind. Dieses hat den Vorteil, daß die Walzenachsen in einer Ebene angeordnet sind und somit von einem Motor über ein Getriebe oder über Riemen- oder Kettentriebe besonders einfach antreibbar sind.

Bei dieser Bauform ist es zweckmäßig, wenn die beiden Gestelle durch Führungen miteinander gleitfähig verbunden sind.

Damit die Arbeit in dieser Vorrichtung auch einen genügenden Wirkungsgrad aufweist, ist es zweckmäßig, wenn die beiden Gestelle durch eine krafterzeugende oder Kräfte aufnehmende Vorrichtung vorzugsweise in Form einer Spindel, eines hydraulischen Servomotors, eines Hebelzuges oder dergleichen miteinander verbunden sind.

Die Arbeit dieser Vorrichtung wird intensiver, wenn die Walzenoberfläche und/oder die Oberfläche der Ausnehmung mit Noppen, Vorsprüngen, Zähnen besetzt ist oder aufgerauht ist, wobei bei über- oder hintereinander angeordneten Walzen-Schalen-Aggregaten die Walzenoberflächen und/oder die Oberflächen der Ausnehmungen durchaus unterschiedlich gestaltet sein sollten.

Auch bei mehreren in einem gemeinsamen Gestell angeordneten Schalei ist es vorteilhaft, wenn die Walze mit einer Preßkraft beaufschlagt ist, die die Walze in die Ausnehmung hineinpreßt, und wenn vorzugsweise verstellbare Anschläge vorgesehen sind, die eine bestimmte, vorzugsweise einstellbare, Spaltweite sichern, wobei es hier zweckmäßig ist, wenn jeder Walze eigene Anschläge zugeordnet sind, die entsprechend der jeweiligen Schalenanordnung in bestimmter Weise angeordnet sind, damit eine vorgegebene Spaltweite nicht unterschritten wird. In diesem Falle ist es zweckmäßig, wenn die Lagerung der Walzen in dem Gestell derart erfolgt, daß zwischen dem Lagerkörper und dem Widerlager im Gestell eine Feder angeordnet ist, welche individuelle Walzeneinstellungen zuläßt.

Als besonders zweckmäßig hat es sich erwiesen, wenn die Walzen und ihr Antrieb in einem feststehenden Gestell angeordnet sind und wenn die Blöcke in einem verschiebbaren Gestell angeordnet sind, welches durch eine Preßvorrichtung nach oben drückbar ist. Auf diese Weise kann der Antriebsmotor fest aufgestellt werden und braucht nicht zusammen mit dem Gestell bewegt zu werden.

Das Wesen der vorliegenden Erfindung ist nachstehend anhand von in der Zeichnung schematisch dargestellten Ausführungsbeispielen näher erläutert. Es zeigen:
- Fig. l: in perspektivischer Ansicht ein Walzen-Schalen Aggregat,
- Fig. 2: das Walzen-Schalen-Aggregat der Fig. l im Schnitt,
- Fig. 3: einen Schnitt durch ein ähnliches Walzen-Schalen-Aggregat,
- Fig. 4: eine Übereinanderanordnung mehrerer Walzen-Schalen-Aggregate,
- Fig. 5: eine Ansicht mehrerer Schalen-Walzen-Aggregate, deren Walzen durch eine Presse niedergepreßt werden,
- Fig. 6: mehrere Walzen-Schalen-Aggregate in Übereinanderanordnung mit hebbarem Gestell für die Schalen,
- Fig. 7: in Einzelansicht das Gestell mit den Walzen,
- Fig. 8: in Einzelansicht das Gestell mit den Schalen.

Die auf der Welle l gelagerte Walze 2 taucht in eine Schale ein, die durch den Block 3 gebildet ist, in welchen eine schalenartige Ausnehmung 4 eingearbeitet ist, welche die Innenform eines Hohlzylindersegmentes aufweist. Auf einer Seite weist der Block 3 einen nach oben gerichteten Vorsprung 5 auf, dessen der Walze 2 zugekehrte Seite 6 übergangslos in die Ausnehmung 4 übergeht. Hierdurch ist ein trichterförmiger Zwickel 7 zwischen der Wand 6 des Vorsprunges 5 und der Oberfläche der Walze 2 gebildet, in welchem die in den Trichter 8 eingeworfenen Brocken in den Spalt 9 zwischen der Ausnehmung 4 und der Oberfläche der Walze 2 eingezogen werden. Auf beiden Seiten ist der Block 3 mit einer Platte l0 versehen, welche den seitlichen Abschluß der Vorrichtung bildet und welche den Trichter 8 sowie den Spalt 9 zu den Seiten hin verschließen.

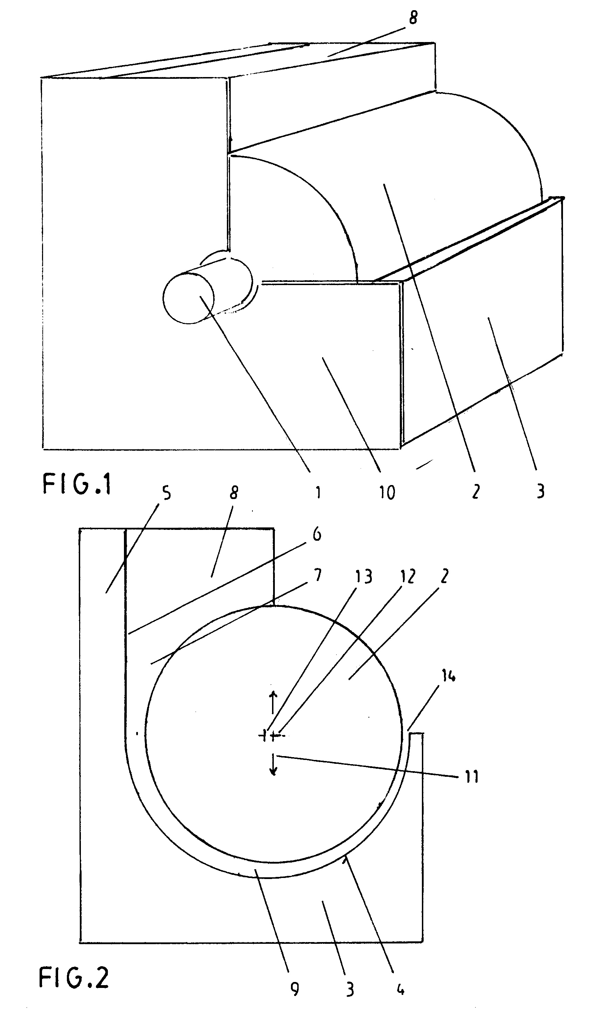

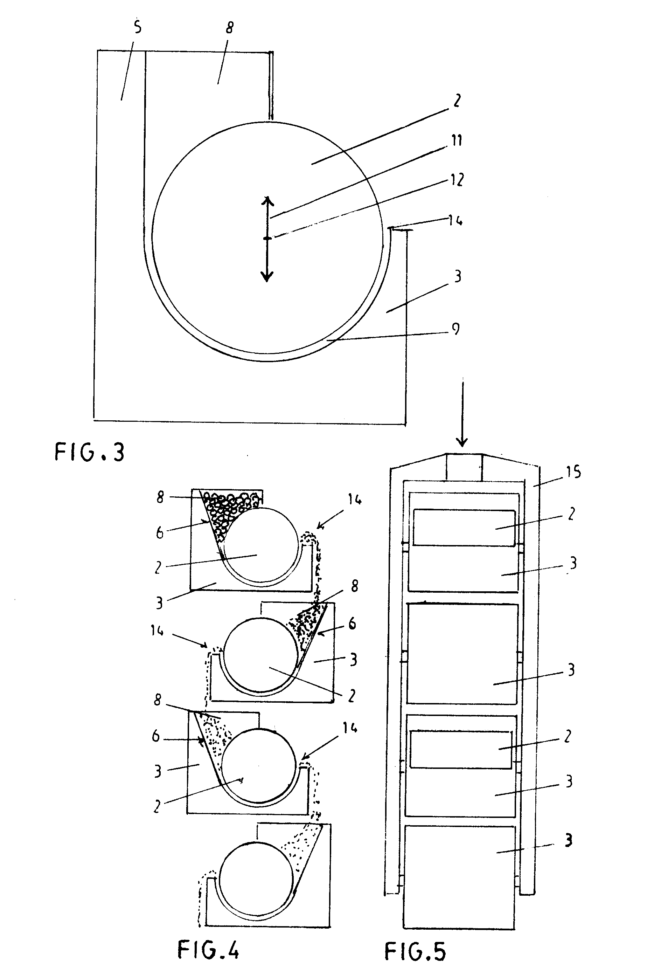

Die Welle l kann in Lagern gelagert sein, deren Lagerkörper fest mit dem Block 3 verbunden sind. In vielen Fällen wird es jedoch zweckmäßig sein, die Welle l beweglich zu lagern, so daß sie entsprechend dem Pfeil ll in geringem Maße vertikal bewegt werden kann, um die Weite des Spaltes 9 entsprechend den Erfordernissen einstellen zu können. Die Achse 12 der Walze 2 kann, wie Fig. 3 zeigt, identisch mit der geometrischen Achse 13 der Ausnehmung 4 sein, sie kann aber auch geringfügig horizontal oder schräg versetzt zur Achse 12 der Walze verlaufen, wie Fig. 2 zeigt. Im Falle der Fig. 3 weist der Spalt 9 fast über seine ganze Länge eine gleiche Spaltweite auf, während die Spaltweite im Falle der Fig. 2 sich vom trichterförmigen Zwickel 7 bis zum Ausgang l4 ständig vermindert.

Die Wand 6 kann, wie die Fig. 2 und 3 zeigen, vertikal verlaufen, sie kann aber auch, wie die Fig. 4 zeigt, schräg verlaufen, um dem Trichter 8 ein größeres Aufnahmevolumen zu geben.

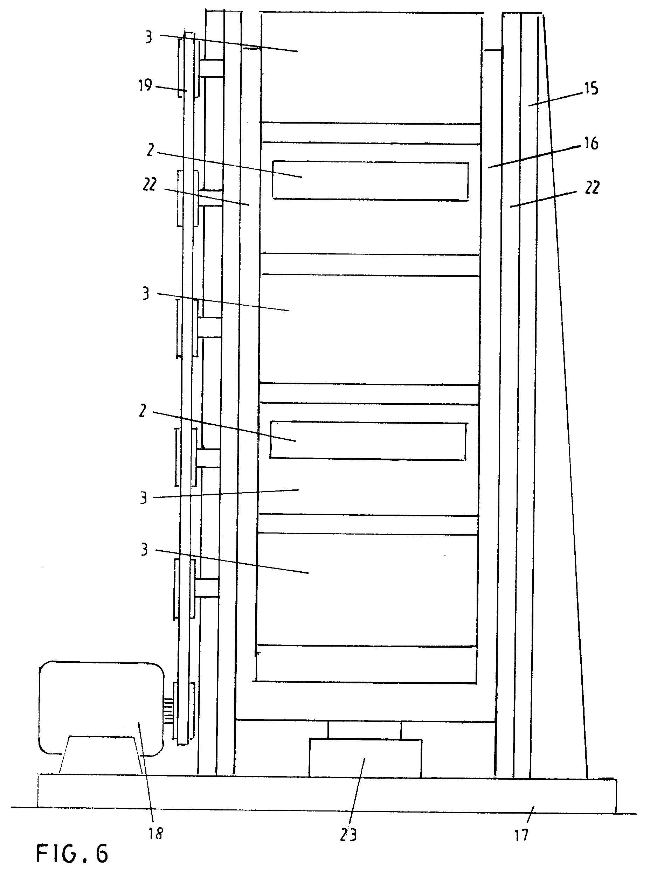

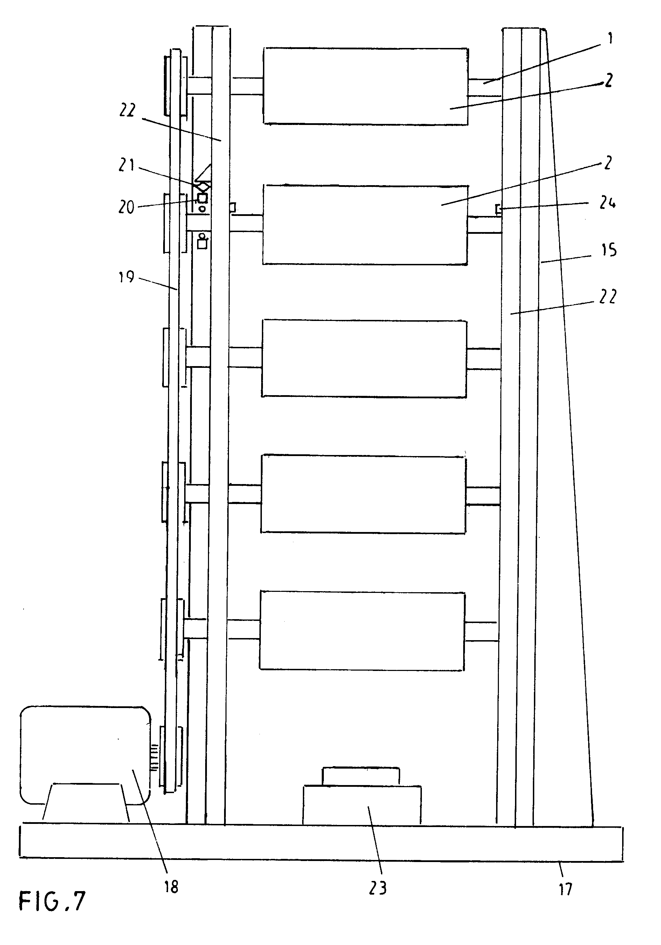

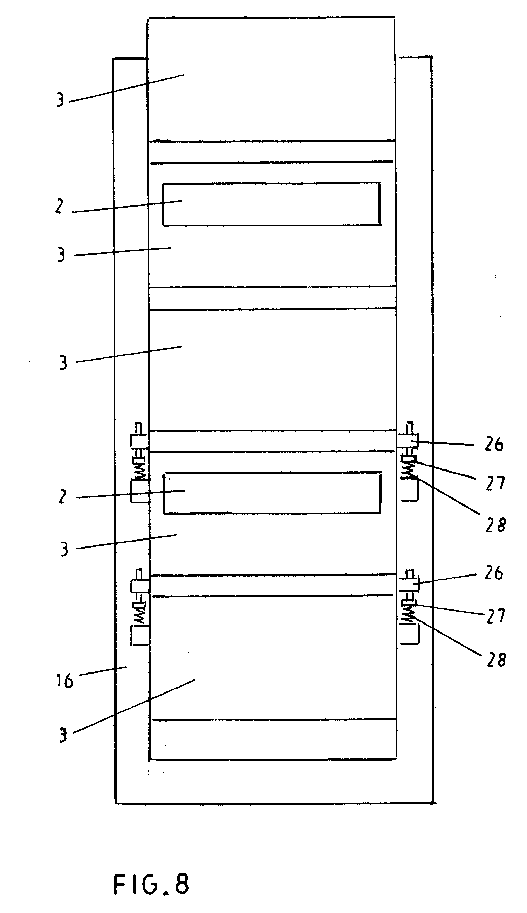

In Fig. 4 ist gezeigt, wie mehrere Walzen 2 - Schalen 4 - Aggegrate übereinander derart angeordnet werden können, daß das aus dem Ausgang des jeweils oberen Aggregates herauskommende zerriebene Material in den Trichter 8 des darunter angeordneten Aggregates hineinfällt und dort einem weiteren Zerreibungsvorgang unterworfen wird. Bei solchen Anordnungen ist es zweckmäßig, wenn die Walzen in einem gemeinsamen Gestell l5 für Walzen 2 und die Schalen 3 in einem gemeinsamen Gestell l6 angeordnet sind. Das zeigen die Fig. 6 - 8. Das Gestell l5 für Walzen 2 ist fest auf dem Fabrikboden l7 montiert, wo auch ein Antriebsmotor l8 fest montiert ist, welcher über Riemen- oder Kettentriebe l9 die einzelnen Wellen l der Walzen 2 antreibt. Im Gestell l5 sind die einzelnen Wellen in Lagerkörpern 20 gelagert, die verschiebbar entgegen der Kraft von Federn 2l angeordnet sind. Da die Verschiebung nur bei sehr hohen Gegenkräften eintreten soll und dann auch nur geringe Verschiebungswege auftreten sollen, werden als Federn 2l Tellerfedern verwendet. In Führungsschienen 22 verschiebbar ist das Gestell l6 für die Blöcke 3 mit den Schalen 4 angeordnet. Die Blöcke 3 sind einzeln und federnd im Gestell 16 befestigt, sodaß sie mit je einem separat einstellbaren Anschlagpaar 26,27,28auf unterschiedliche Spaltweiten 9 eingestellt werden können. Dieses Gestell kann durch einen hydraulischen Servomotor 23, vorzugsweise in Form einer Hydraulik-Kolben-Zylinder-Einheit nach oben gepreßt werden, um die Spaltweiten entsprechend den einzelnen Einstellungen zu verringern. An Stelle eines hydraulischen Servomotors können auch andere Servomotore z.B. in Form von Spindeln, die auch elektromotorisch angetrieben sein können, Verwendung finden.

Am Gestell l5 seitlich angebrachte Anschläge 24 begrenzen den möglichen Verschiebungsweg der Walzen 2, damit immer ein Spalt 9 aufrecht erhalten bleibt und die Walze nicht direkt an der schalenförmigen Oberfläche 4 reibt. Diese versetzbaren Anschläge 24 weisen ein Langloch auf, durch das Schrauben 25 hindurchgreifen, mit welchen die Anschläge auf vorbestimmte Werte feststellbar sind.

Während des Betriebes der Vorrichtung sich erhitzende Bauteile, so die Reibflächen der Blöcke 3 und die Walzenoberfläche, werden zweckmässigerweise gekühlt, z.B. durch in die Blöcke und Walzen eingebaute z.B. von Kühlwasser durchströmte Kühlkanäle.

### Liste der Bezugszeichen:

- 1: Welle
- 2: Walze
- 3: Block
- 4: Ausnehmung
- 5: Vorsprung
- 6: Seite
- 7: Zwickel
- 8: Trichter
- 9: Spalt
- 10: Platte
- 11: Pfeil
- 12: Achse der Walze 2
- 13: Geometrische Achse
- 14: Ausgang
- 15: Gestell für Walzen
- 16: Gestell für Schale
- 17: Boden
- 18: Motor
- 19: Kettentrieb
- 20: Lagerkörper
- 21: Feder
- 22: Führungsschiene
- 23: Hydraulischer Servomotor
- 24: Anschlag
- 25: Schraube
- 26: Anschlag
- 27: Schraube
- 28: Feder

## Patentansprüche

1. Vorrichtung zum Pulverisieren von Gummibrocken, dadurch gekennzeichnet,
daß in einer feststehenden Schale mit einer Ausnehmung (4) von der Form eines Hohlzylindersegmentes eine in diese Ausnehmung eintauchende rotierende Walze (2) derart angeordnet ist, daß zwischen der Schale (4) und der Walze (2) ein Spalt gebildet ist,
und daß die Ausnehmung (4) an der Seite, an der die Walzenoberfläche bei der Walzenrotation in die Ausnehmung eintritt, trichterförmig erweitert ist, oder daß über der Stelle, an der die Walzenoberfläche bei der Walzenrotation in die Ausnehmung (4) eintritt, ein Trichter (8) angeordnet ist.

2. Vorrichtung nach Anspruch l,
dadurch gekennzeichnet,
daß die Schale (4) durch eine halbzylindrische Ausnehmung in einem quaderförmigen Block (3) gebildet ist.

3. Vorrichtung nach Anspruch l und 2,
dadurch gekennzeichnet,
daß der quaderförmige Block (3) auf einer Seite der halbzylindrischen Ausnehmung (4) einen nach oben gerichteten Vorsprung (5) aufweist, der eine feststehende Wand des Trichters (8) bildet, dessen gegenüberliegende Wand durch einen Teil der nicht in die Ausnehmung eintauchenden Walzenoberfläche gebildet ist.

4. Vorrichtung nach Anspruch l und 2,
dadurch gekennzeichnet,
daß die Ausnehmung (4) durch seitlich am quaderförmigen Block angeordnete Platten (l0) verschlossen ist.

5. Vorrichtung nach Anspruch l,
dadurch gekennzeichnet,
daß mehrere Schalen (3,4) versetzt übereinander angeordnet sind.

6. Vorrichtung nach Anspruch 5,
dadurch gekennzeichnet,
daß die Trichter (8) wechselnd einmal auf der einen, das andere Mal auf der anderen Seite vorzugsweise derart angeordnet sind, daß sich jeder Trichter (8) unter dem Spaltausgang (14) des darüber angeordneten Walzen-Schalen-Aggregates befindet.

7. Vorrichtung nach Anspruch 5,
dadurch gekennzeichnet,
daß die Blöcke (3) der Walzen-Schalen-Aggregate auf einem gemeinsamen Gestell (16) vorzugsweise federnd und einzeln einstellbar angeordnet sind, daß die Walzen (2) in einem weiteren Gestell (15) gemeinsam angeordnet sind,
und daß die beiden Gestelle (15,16) relativ zueinander verschiebbar sind.

8. Vorrichtung nach Anspruch 7,
dadurch gekennzeichnet,
daß die beiden Gestelle (l5.l6) durch Führungen miteinander gleitfähig verbunden sind.

9. Vorrichtung nach Anspruch 7,
dadurch gekennzeichnet,
daß die beiden Gestelle (l5,l6) durch eine krafterzeugende oder Kräfte aufnehmende Vorrichtung vorzugsweise in Form einer Spindel, eines hydraulischen Servomotors (23), eines Hebelzuges oder dergleichen miteinander verbunden sind.

10. Vorrichtung nach Anspruch 7,
dadurch gekennzeichnet,
daß die im Gestell (15) gelagerten Walzen (2) gemeinsam über ein Getriebe oder Riemen oder Ketten (19) von einem Motor (18) angetrieben sind.

11. Vorrichtung nach Anspruch l,
dadurch gekennzeichnet,
daß die Walzenoberfläche und/oder die Oberfläche der Ausnehmung (4) mit Noppen, Vorsprüngen, Zähnen besetzt ist oder aufgerauht ist.

12. Vorrichtung nach Anspruch l,
dadurch gekennzeichnet,
daß die Walze (2) mit einer Preßkraft beaufschlagt ist, die die Walze (2) in die Ausnehmung (4) hineinpreßt,
und daß vorzugsweise verstellbare Anschläge (24) vorgesehen sind, die eine bestimmte, vorzugsweise einstellbare, Spaltweite sichern.

13. Vorrichtung nach Anspruch 1,
dadurch gekennzeichnet,
daß die Walzen (2) und ihr Antrieb in einem feststehenden Gestell (15) angeordnet sind und daß die Blöcke (3) in einem verschiebbaren Gestell (16) angeordnet sind, welches durch eine Preßvorrichtung (23) nach oben drückbar ist.

14. Vorrichtung nach Anspruch 5,
dadurch gekennzeichnet,
daß zwischen je zwei Walzen-Schalen-Aggregaten eine Sieb-, Sortier- und/oder Sichtvorrichtung und/oder eine Metallsuch- und Aussortiervorrichtung angeordnet ist.

15. Vorrichtung nach Anspruch 5 bis 10,
dadurch gekennzeichnet,
daß die Lagerkörper (20) der Walzen (2) gegen die Kraft von Federn (2l) verschiebbar in ihrem Gestell (15) angeordnet sind.
